# EUROPEAN PATENT SPECIFICATION

(11) **EP 1 687 889 B1**
(45) Date of publication and mention of the grant of the patent: **27.02.2008**
(21) Application number: 04799075.9
(22) Date of filing: 08.11.2004
(51) Int. Cl.: H02M 3/335

(54) **A TUNER-COMPATIBLE SWITCH MODE POWER SUPPLY ARCHITECTURE**
TUNER-KOMPATIBLE SCHALTNETZTEILARCHITEKTUR
ARCHITECTURE D'ALIMENTATION À DÉCOUPAGE COMPATIBLE AVEC UN SYNTONISEUR

(30) Priority: 14.11.2003 EP 03104200
(43) Date of publication of application: 09.08.2006
(73) Proprietor: Bobinados de Transformadores S.L., 50450 Muel, Zaragoza (ES)
(72) Inventor: SMIDT, Pieter, J., M., NL-5656 AA Eindhoven (NL)
(74) Representative: Riem, Charles Hendrik
(86) International application number: PCT/IB2004/052330
(87) International publication number: WO 2005/048441

(56) References cited:
- EP-A- 0 654 911
- WO-A-02/19551
- GB-A- 2 308 950
- US-A- 5 765 113

## Description

The present invention relates to a power supply arrangement.

Switch mode power supplies (SMPS) are being employed to an ever increasing extent in consumer electronics (CE) products. The main reasons for this have been price, size, efficiency and, particularly in the last years, standby power requirements. A major exception to this has been audio equipment applications, due to the fact that audio equipment typically contains a tuner for receiving radio frequency signals. The tuner is a comparatively sensitive device, capable of deriving information from signals having magnitudes of micro volts. Because of electromagnetic interference (EMI) caused by an SMPS, it has up until now been very difficult to design an SMPS which is suitable for use with a tuner.

US 5 765 113 discloses a power supply for a tuner wherein the power supply is switched off when an interference is indicated.

Typically, in tuner applications, a linear power supply has been used. The major drawbacks of such a power supply include: bulkiness, poor efficiency (typically less than 50%) and poor standby power properties. However, the power demands for audio applications such as e.g. home cinema increase rapidly on a market which calls for smaller products, higher efficiencies and lower standby power requirements. Consequently, the linear power supply solution clearly appears to be a bottleneck.

WO 02/19551 discloses a system which includes a radio receiver and switched mode circuitry, such as a switched mode audio power amplifier and a switched mode power supply, operating at a selected switching frequency. Circuitry is included for setting the switching frequency of the switched mode circuitry as a function of a frequency of a signal being received by the radio receiver. Consequently, the interference created by the switching frequency and its harmonics are moved above or below the frequency band of the received signal.

However, a problem with WO 02/19551 is that while the switching frequency approach which is described allows the receiver to receive correctly in the AM band which is located at approximately 540-1600 kHz, this approach cannot possibly be used in the FM band, due to the frequency location of the FM band. The FM band is located at approximately 88-108 MHz, and the switching frequency would clearly have to be much too high to be used in the system according to WO 02/19551.

An object of the present invention is to solve the problems given above and provide a power supply suitable for use with a device operated to receive in the FM band as well as the AM band, and which supply has excellent standby power characteristics.

This object is achieved by a power supply arrangement according to claim 1. Preferred embodiments of the invention are defined by the dependent claims.

According to a first aspect of the invention, a power supply arrangement is provided, which arrangement comprises a first power supply having a configuration arranged to inhibit electromagnetic interference. The first power supply produces at least one first output voltage and supplies it to an EMI sensitive first device. The arrangement has a second power supply with a configuration arranged to produce at least one second output voltage. This second output voltage is supplied to a second device. Further, a control means is arranged to operate the first and second power supplies in such a way that the second power supply is deactivated when the first supply feeds the first device.

The basic idea of the invention is to provide a power supply arrangement which produces at least two output voltages; a first power supply produces a first output voltage to at least one first device, e.g. an AM/FM tuner, a receiver or some other equipment sensitive to switching operations; a second power supply produces a second output voltage, the second supply being operative when the first device is off, to at least one second device. The power supply further comprises a control means arranged to operate the second power supply, i.e. to turn it on and off. Typically, the control means puts the second power supply in the off mode when the tuner is operating, and switches the second supply into operation when the tuner is inoperative.

By employing two power supplies, it is possible to combine the favorable characteristics of each supply and create a power supply arrangement which is suitable for use with a tuner or some other EMI- sensitive device, which is cost-effective, small, highly efficient and has low standby power. This is due to the fact that the first power supply is chosen such that its properties are suitable for use with the first supply load, e.g. its ability to suppress EMI must be strong. The second supply is correspondingly chosen such that its properties are adapted to the load of the second power supply. For example, it must be able to generate a number of different supply voltages. For a typical audio application, i.e. an application in which the power supply arrangement is included in audio equipment together with at least one first device and at least one second device, ten or more different output voltages may be needed. Moreover, the standby power of the second supply will be low.

According to an embodiment of the present invention, the first output voltage is supplied by a first power supply suitable for use with a tuner, e.g. a resonant half-bridge. The first power supply typically feeds audio amplifiers, the tuner itself and the control means. This is due to the fact that even though the audio amplifiers and the control means are not EMI- sensitive, they must still be able to be operative when the second power supply is inoperative. The choice of a resonant half-bridge is advantageous, since the topology (i.e. the configuration) of the resonant half-bridge causes a relatively small amount of EMI.

According to another embodiment of the present invention, the second output voltage is supplied by a second power supply, e.g. a flyback converter, which is not necessarily is adapted to the tuner, but which is capable of generating the second output and preferably additional output voltages in a simple manner and which has very low standby power. The second output voltage typically feeds equipment that is less sensitive to switching operations, such as CD players, DVD players, VCRs etc.

According to yet another embodiment of the present invention, the control means is implemented in the form of a microprocessor running application software that instructs the processor how to operate the second power supply. This has the advantage that if the operation of the power supply needs to be modified or altered, this can be done by the application. Consequently, no changes need be made in actual power supply hardware.

Further features of, and advantages with, the present invention will become apparent when studying the appended claims and the following description. Those skilled in the art realize that different features of the present invention can be combined to create embodiments other than those described in the following.

Preferred embodiments of the present invention will be described in detail with reference made to the accompanying drawings, in which:
Fig. 1 shows a schematic view of a power supply arrangement according to an embodiment of the present invention;
Fig. 2 shows a schematic view of a flyback converter comprised in the power supply arrangement according to an embodiment of the invention; and
Fig. 3 shows a schematic view of a half-bridge converter comprised in the power supply arrangement according to another embodiment of the invention.

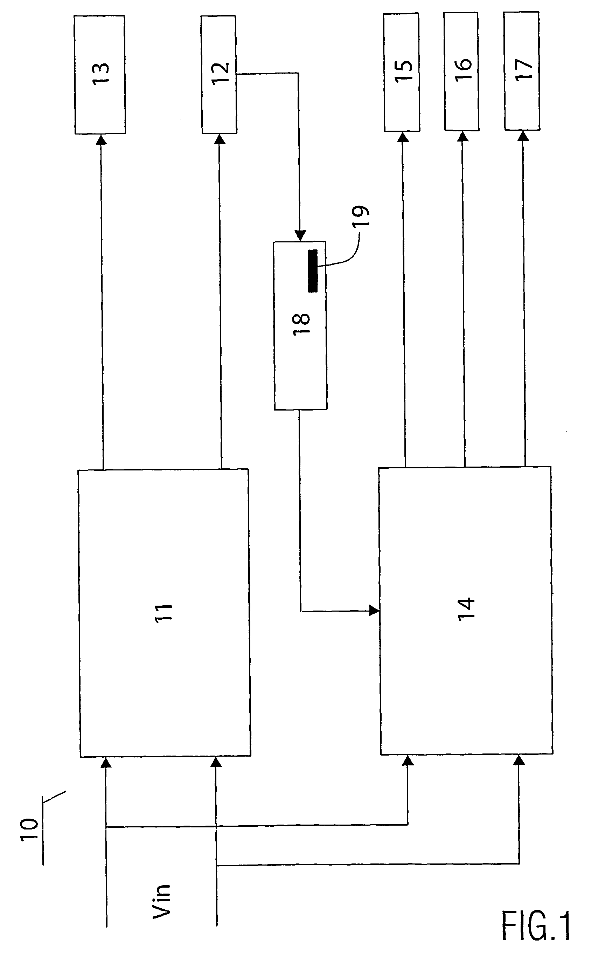

Fig. 1 shows a schematic view of a power supply arrangement 10 according to an embodiment of the present invention. The arrangement comprises a first power supply 11, e.g. in the form of a half-bridge converter, suitable for use with a tuner 12. The first power supply typically also feeds audio amplifiers 13 and other devices which may be included in the electronic equipment, typically some type of audio equipment, in which the arrangement is employed. A principal description of a half-bridge converter will be given below. Other suitable types of power supplies can be used as the first power supply, given that they cause a relatively small amount of EMI. The arrangement further comprises a second power supply 14 in the form of, for example, a flyback converter or some other appropriate power supply which is suitable for producing multiple output voltages and which has a low standby power. A typical flyback converter will be described in the following. The second supply typically feeds equipment which is less sensitive to switching operations, such as a CD player 15, a DVD player 16 and a turntable 17. The power supplies are preferably both fed from a main input Vin. A control means 18, implemented in the form of e.g. a CPU 18 controlled by application software, control the operation of the second power supply 14. When the tuner 12 is operative, the second power supply must be inoperative, as the tuner is sensitive to the switching operation of the second supply. For the tuner to qualitatively receive radio signals, the switching operation must temporarily be halted. When the tuner is inoperative, it will signal to the control means 18 to activate the second power supply 14.

Note that the power amplifier 13 and the control means 18 must be fed from the first power supply 11, as these components must be operative even though the second power supply is inoperative.

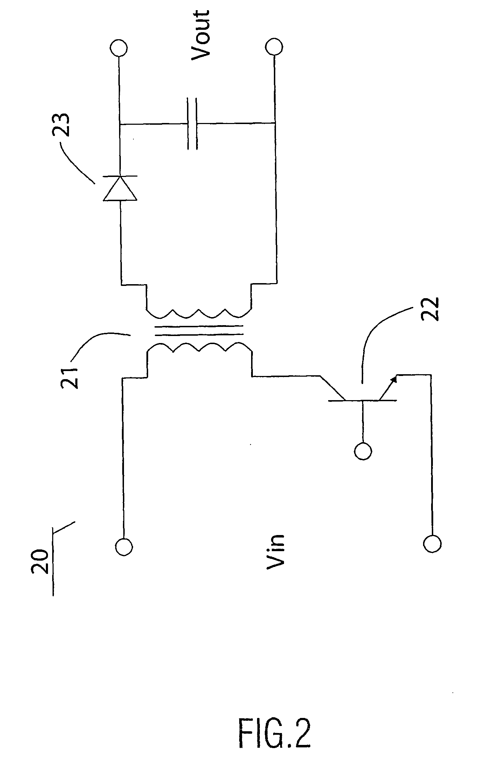

Fig. 2 shows a schematic view of a well-known flyback converter 20, which is comprised in the power supply arrangement according to an embodiment of the invention. To switch the input voltage Vin of the converter across the flyback transformer 21 to the main output Vout, a transistor 22 is turned on, whereby current builds up in the primary winding and energy is stored in the transformer core. This energy then commutates to the secondary side of the transformer through the secondary winding when the transistor is turned off. The polarity of the transformer windings is arranged such that an output diode 23 blocks when the transistor is in its conducting mode. When the transistor turns off, the secondary voltage reverses and forces the secondary current to flow through the diode to an output load. The secondary winding inductance is in series with the output diode when current is delivered to the load, which means that no filter inductor is needed at the output and consequently, each output requires only one diode and one output filter capacitor. Thus, the flyback converter is suitable for generating low cost, multiple output supplies.

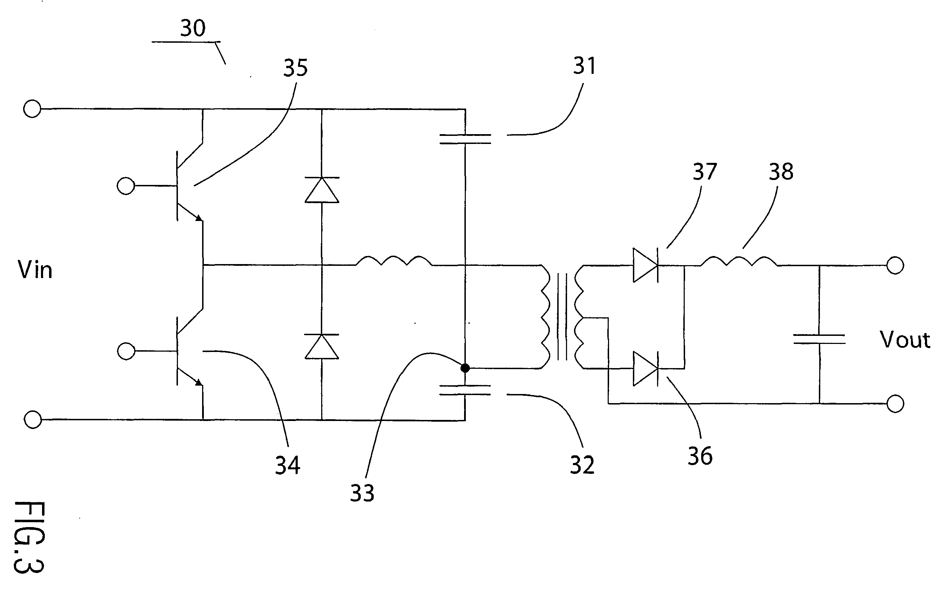

Fig. 3 shows a schematic view of a well-known half-bridge converter 30, which is comprised in the power supply arrangement according to another embodiment of the invention. Two capacitors 31, 32 are connected in series, and an artificial input voltage midpoint 33 is provided. Alternate driving of the two transistors 34, 35 is employed, and this connects each capacitor across the primary winding each half cycle. The diodes 36, 37 block and conduct, respectively, during each half period. The current flowing through the diodes causes energy to be built up in the output inductor 38, whereby power is transferred directly to the output Vout on each transistor conduction time. The half-bridge is highly efficient and has very low output ripple, making it very suitable to use in conjunction with a tuner.

Even though the invention has been described with reference to specific exemplifying embodiments thereof, many different alterations, modifications and the like will become apparent to those skilled in the art. The described embodiments are therefore not intended to limit the scope of the invention, as defined by the appended claims.

## Claims

1. A power supply arrangement (10) comprising:
a first power supply (11) having a configuration arranged to inhibit electromagnetic interference, wherein said first supply produces at least one first output voltage and supplies it to a first device (12) which is sensitive to electromagnetic interference;
a second power supply (14) having a configuration arranged to produce at least one second output voltage, wherein said second power supply (14) produces said at least one second output voltage and supplies it to a second device (15, 16, 17); and
a control means (18) arranged to operate said second power supply (14), wherein said second power supply (14) is deactivated when said first device (12) is operative and fed from said first power supply.

2. The power supply arrangement (10) according to claim 1, wherein said first device (12) comprises a tuner operated to receive in the AM/FM band.

3. The power supply arrangement (10) according to any one of claims 1 or 2, wherein the two power supplies (11, 14) are fed from the same power supply main input (Vin).

4. The power supply arrangement (10) according to any one of claims 1-3, wherein the first power supply (11) comprises a resonant half-bridge converter (20).

5. The power supply arrangement (10) according to any one of claims 1-4, wherein the second power supply (14) comprises a flyback converter (30).

6. The power supply arrangement (10) according to any one of the preceding claims, wherein said power supply arrangement is included in an audio equipment together with said first device (12, 13, 18) and said second device (15, 16, 17).

7. The power supply arrangement (10) according to claim 6, wherein said control means (18) is controlled by the audio equipment.

8. The power supply arrangement (10) according to any one of the preceding claims, wherein the control means (18) comprises a microprocessor (19) running an application software which instructs said microprocessor how to operate said second power supply (14).

## Patentansprüche

1. Netzteilanordnung (10) einschließlich:
einem ersten Netzteil (11) mit einer Konfiguration, die so eingerichtet ist, dass elektromagnetische Störbeeinflussung unterdrückt wird, wobei das erste Netzteil mindestens eine erste Ausgangsspannung erzeugt und diese einer ersten Einrichtung (12), welche für elektromagnetische Störbeeinflussung empfindlich ist, zuführt,
einem zweiten Netzteil (14) mit einer Konfiguration, die so eingerichtet ist, dass mindestens eine zweite Ausgangsspannung erzeugt wird, wobei das zweite Netzteil (14) die mindestens eine zweite Ausgangsspannung erzeugt und diese einer zweiten Einrichtung (15, 16, 17) zuführt, sowie
einem Steuermittel (18), welches so eingerichtet ist, dass es das zweite Netzteil (14) betreibt, wobei das zweite Netzteil (14) deaktiviert wird, sobald die erste Einrichtung (12) betriebsbereit ist und von dem ersten Netzteil gespeist wird.

2. Netzteilanordnung (10) nach Anspruch 1, wobei die erste Einrichtung (12) einen Tuner einschließt, der zum Empfang in dem AM/FM-Band arbeitet.

3. Netzteilanordnung (10) nach Anspruch 1 oder 2, wobei die zwei Netzteile (11, 14) von dem gleichen Netzteil-Haupteingang (Vin) gespeist werden.

4. Netzteilanordnung (10) nach einem der Ansprüche 1 bis 3, wobei das erste Netzteil (11) einen Halbbrücken-Resonanzumwandler (20) einschließt.

5. Netzteilanordnung (10) nach einem der Ansprüche 1 bis 4, wobei das zweite Netzteil (14) einen Sperrwandler (30) einschließt.

6. Netzteilanordnung (10) nach einem der vorangegangenen Ansprüche, wobei die Netzteilanordnung zusammen mit der ersten Einrichtung (12, 13, 18) und der zweiten Einrichtung (15, 16, 17) in ein Audiogerät beinhaltet ist.

7. Netzteilanordnung (10) nach Anspruch 6, wobei das Steuermittel (18) von dem Audiogerät gesteuert wird.

8. Netzteilanordnung (10 nach einem der vorangegangenen Ansprüche, wobei das Steuermittel (18) einen Mikroprozessor (19) einschließt, der eine Applikationssoftware laufen lässt, die den Mikroprozessor anweist, wie das zweite Netzteil (14) zu betreiben ist.

## Revendications

1. Montage d'alimentation électrique (10) comprenant:
une première alimentation électrique (11) ayant une configuration qui est agencée de manière à empêcher une interférence électromagnétique, dans laquelle ladite première alimentation produit au moins une première tension de sortie et la fournit à un premier dispositif (12) qui est sensible à une interférence électromagnétique;
une seconde alimentation électrique (14) ayant une configuration qui est agencée de manière à produire au moins une seconde tension de sortie, dans laquelle ladite seconde alimentation électrique (14) produit ladite au moins une seconde tension de sortie et la fournit à un second dispositif (15, 16, 17), et
des moyens de commande (18) qui sont agencés de manière à faire fonctionner ladite seconde alimentation électrique (14), dans lesquels ladite seconde alimentation électrique (14) est désactivée lorsque ledit premier dispositif (12) est actif et est alimenté à partir de ladite première alimentation électrique.

2. Montage d'alimentation électrique (10) selon la revendication 1, dans lequel ledit premier dispositif (12) comprend un syntoniseur qui est actionné de manière à recevoir dans la bande MA/MF.

3. Montage d'alimentation électrique (10) selon l'une quelconque des revendications précédentes 1 et 2, dans lequel les alimentations électrique (11, 14) sont alimentées à partir de la même entrée principale d'alimentation électrique (Vin).

4. Montage d'alimentation électrique (10) selon l'une quelconque des revendications précédentes 1 à 3, dans lequel la première alimentation électrique (11) comprend un convertisseur en demi-pont résonnant (20).

5. Montage d'alimentation électrique (10) selon l'une quelconque des revendications précédentes 1 à 4, dans lequel la seconde alimentation électrique (14) comprend un convertisseur Flyback (30).

6. Montage d'alimentation électrique (10) selon l'une quelconque des revendications précédentes 1 à 5, dans lequel ledit montage d'alimentation électrique est incorporé dans un équipement audio en combinaison avec ledit premier dispositif (12, 13, 18) et ledit second dispositif (15, 16, 17).

7. Montage d'alimentation électrique (10) selon la revendication 6, dans lequel lesdits moyens de commande (18) sont commandés par l'équipement audio.

8. Montage d'alimentation électrique (10) selon l'une quelconque des revendications précédentes 1 à 7, dans lequel les moyens de commande (18) comprennent un microprocesseur (19) mettant en route un logiciel d'application qui instruit ledit microprocesseur comment faire fonctionner ladite seconde alimentation électrique (14).
